# EUROPEAN PATENT SPECIFICATION

(11) **EP 4 474 044 B1**
(45) Date of publication and mention of the grant of the patent: **22.10.2025**
(21) Application number: 23382572.8
(22) Date of filing: 09.06.2023
(51) Int. Cl.: B01J 20/04, B01D 53/02, B01D 53/50, B01J 20/28, B01J 20/30, B01J 20/12

(54) **MACROPOROUS MATERIALS CONTAINING CALCIUM HYDROXIDE AND THEIR USE IN PROCESSES OF RETENTION OF SO2**
MAKROPORÖSE MATERIALIEN MIT CALCIUMHYDROXID UND DEREN VERWENDUNG BEI VERFAHREN ZUR RETENTION VON SO2
MATÉRIAUX MACROPOREUX CONTENANT DE L'HYDROXYDE DE CALCIUM ET LEUR UTILISATION DANS DES PROCÉDÉS DE RÉTENTION DE SO2

(43) Date of publication of application: 11.12.2024
(73) Proprietor: Consejo Superior De Investigaciones Científicas - CSIC, 28006 Madrid (ES); Universidad de Huelva, 21071 Huelva (ES); Atlantic Copper, S.L.U., 21001 Huelva (ES)
(72) Inventor: PÉREZ ROMERO, Pedro J., 21071 Huelva (ES); DÍAZ REQUEJO, M. Mar, 21071 Huelva (ES); PIZARRO JAVIER, Juan Diego, 21071 Huelva (ES); PORTELA RODRÍGUEZ, Raquel, 28006 Madrid (ES); ÁVILA GARCÍA, Pedro, 28006 Madrid (ES); ROMERO VÁSQUES, Flavio Jesús, 28006 Madrid (ES); RÍOS RANSANZ, Guillermo, 21001 Huelva (ES); RUIZ ORIA, Irene, 21001 Huelva (ES); MEJÍA PÉREZ, Alberto, 21001 Huelva (ES)
(74) Representative: Elzaburu S.L.P.

(56) References cited:
- EP-A1- 2 246 318
- IT-A1- MI20 101 465
- US-A- 5 502 021

## Description

### FIELD OF THE INVENTION

The present invention relates to an adsorbent material with high capacity for retaining SO₂, so the invention belongs to the field of green chemistry.

### BACKGROUND OF THE INVENTION

Most of the world's primary copper originates in sulfide minerals. Sulfur is, therefore, evolved by most copper extraction processes. The most common form of evolved sulfur is sulfur dioxide (SO₂) gas from smelting and converting. Off gases from these operations are treated for SO₂ removal in sulfuric acid plants. Copper smelters typically produce 2.5-4.0 tons of sulfuric acid per ton of product copper depending on the S/Cu ratio of their feed materials.

Most smelters have some kind of emergency system, which is activated for example in the case of power outage events, either due to incidents in the plant or to general cuts in the electrical network. Emergency systems activation, however, usually has an unavoidable delay of between 1-2 minutes. In this period, the SO₂-containing gases must be expelled to the outside to avoid their accumulation and the risk of explosion. In this situation an effective system for the retention of highly concentrated SO₂ in high-flow gas streams becomes necessary to avoid its release into the atmosphere.

The techniques used for SO₂ retention in industrial gaseous emission purification systems can be classified mainly into two large groups: A) systems based on the absorption of SO₂ in a solution containing a compound that reacts with it, and B) systems based on the adsorption of SO₂ on the reactive surface of a solid. The preferred option depends on the operating conditions (temperature, flow rate, concentration, etc.). Absorption is mainly used in systems operating at low temperature (T< 150°C) with relatively low SO₂ concentration (<10,000 mg SO₂ Nm⁻³), such as thermal power plants, where purification systems are often installed after ash removal (electrostatic filters) and is usually based on alkaline solutions or slurries of alkaline earth compounds. Adsorption is mainly used when gases are at high temperature, and is usually based on alkaline earth oxides, hydroxides or carbonates, typically calcium, magnesium or both. This is the most suitable option for treating high-flow-rate emergency emissions from metallurgical processes, which are at 250ºC. Considering that a high SO₂ concentration of smelting off gas is vented into the atmosphere during a short period of time, it is considered that the purification system should retain for the maximum possible time (at least 5 min) around 99% of the SO₂, and ideally up to 99.7%. The reference parameter for determining the efficiency of a given adsorbent is the mass of SO₂ (mg) retained per mass of adsorbent material (g) until the outlet concentration is higher than a selected value. In addition, the system must have adequate fluid dynamic performance to avoid a high pressure drop and plugging of the system. This requires the use of a fixed bed based on materials with high mechanical strength, especially resistance to compression and attrition, to minimize the formation of fines during handling and operation.

The document ES2315179B1 describes a composition of a material characterized in that it comprises sepiolite, enstatite or its mixtures together with carbonates, hydroxides or oxides of alkaline or alkaline earth elements and their mixtures, which is obtained by heating at temperatures of 600-900°C and may be used in the purification of gases generated by combustion systems for acid gases and vapors removal in fixed and mobile beds. The document EP2246318A1 describes materials used in the removal of acid gases in fixed and mobile beds which present a porous structure comprising calcium carbonate and magnesium carbonate together with clays of bentonite, sepiolite and aluminum silicate type obtained by heating treatments between 650-900°C. The document EP2093257A1 describes a device for the removal of pollutants such as SO₂ in which calcium hydroxide is used, and additionally sodium bicarbonate and sepiolite. However, these and other conventional methods known in the art are not suitable for certain conditions as for example those occurred in copper refining plants.

The document IT MI20 101 465 describes a composition for removal of SO₂ from gaseous streams comprising Ca(OH)₂ and an alkaline and/or alkaline-earth bicarbonate. The document US 5 502 021 describes a composition comprising Ca(OH)₂ and additives such as porous ground clay. Therefore, there is a need to obtain an adsorbent material with a high capacity to retain acid gases such as SO₂, specifically to be applied in emergency point emissions of copper factories, and which may be obtained by optimized process.

### DESCRIPTION OF THE INVENTION

The present invention relates to a new shaped material, preferably extruded, preferably in cylinder form, composed of the combination of calcium hydroxide, sodium bicarbonate, potassium bicarbonate and sepiolite, and its use as an adsorbent in a fixed bed system for treatment of gaseous streams possessing high concentrations of SO₂ at temperatures preferably below 300ºC. The material of the invention contains calcium hydroxide, which reacts with SO₂ to form CaSO₃, which is adsorbed with high efficiency on the surface due to the existence of a macroporous structure. This structure minimizes the diffusional limitations of gases inside the particles, thus achieving an efficient capture of polluting gas. Calcium hydroxide has been properly mixed with a fibrous silicate, sepiolite, which gives it consistency to have adequate mechanical resistance, and with sodium and potassium bicarbonates, which increase the basicity of the surface, and therefore the retention capacity of SO₂, allow the control of humidity necessary for the stability and efficiency of the adsorbents, and increase the macroporosity of the system. In this way, the proportions of each of the elements and the method of incorporating them into the final solid have been optimized, obtaining a material that has demonstrated excellent properties to retain SO₂ with high efficiency in high demanding conditions of concentration and flow rate.

Thus, a first aspect of the invention refers to a material for adsorbing SO₂, wherein said material comprises the following components:
a. 20-40% wt. of Ca(OH)₂,
b. 20-40% wt. of sepiolite,
c. 10-30% wt. of NaHCO₃ and
d. 10-30% wt. of KHCO₃.

Preferably, the material of the invention comprises the following components:
a. 25-35% wt. of Ca(OH)₂,
b. 25-35% wt. of sepiolite,
c. 15-25% wt. of NaHCO₃ and
d. 15-25% wt. of KHCO₃.

More preferably, the material of the invention comprises the following components:
a. 30% wt. of Ca(OH)₂,
b. 30% wt. of sepiolite,
c. 20% wt. of NaHCO₃ and
d. 20% wt. of KHCO₃.

Preferably, the total humidity content of the material of the invention is between 5-20% wt. The humidity content may be measured by thermobalance.

Preferably, the specific surface of the material of the invention is between 3-10 m²g⁻¹.

Preferably, the total volume of meso and macropores of the material of the invention is between 0.20-0.40 cm³g⁻¹.

Preferably, the proportion of macropores of the material of the invention is greater than 90 %

These parameters may be measured by mercury intrusion porosimetry.

Preferably, the material of the invention is shaped as solid cylinders, which may have dimensions of 2 to 10 mm in diameter, preferably between 3 and 5 mm, and 3 to 10 mm in length.

Another aspect of the invention refers to a method to obtain a material as described above, comprising the following steps:
a. mixing sepiolite, calcium hydroxide, sodium bicarbonate and potassium bicarbonate powders until a homogeneous powder mixture is obtained;
b. adding water to the homogeneous mixture of powders and kneading the wet paste to obtain adequate plasticity;
c. extruding the wet paste, preferably at a pressure below 10 bar, preferably in a piston extruder, preferably in the form of solid cylinders, and
d. drying the extruded pieces at a temperature between 40 and 60°C for a time between 4-48 hours.

Another aspect of the invention refers to the use of the material as previously disclosed for the adsorption of SO₂. Preferably, this adsorption process occurs in dynamic regime and high concentration of SO₂ at temperatures between 50 and 300ºC.

Specifically, the material of the invention may be used in the purification of emergency gases of copper smelters, in which a stream of high SO₂ smelting off gas is vented into the atmosphere during a short period of time. With a SO₂ retention values greater than 99%, this material reduces the SO₂ content in the emitted gases below 1000 mg/Nm³ minimizing the risk of punctual peaks of SO₂ emissions and hence avoids air quality problems in nearby areas. The adsorption capacity of the material of the invention will be demonstrated in the examples, and compared with other similar materials known in the art.

As mentioned in the present description, the application for which the material of the invention is intended to be used cannot be considered as a conventional SO₂ emission, where the needed cleaning procedure is based on the continuous treatment of the polluted gas stream (or for long periods of time), but when it requires the immediate and total capture of a very high concentration during a relatively short period of time. This means that the efficiency of the material of the invention will be compared with the efficiency of similar materials in these conditions in the examples, showing much better results.

### BRIEF DESCRIPTION OF FIGURES

Figure 1: Comparison of the breakthrough curves obtained with materials prepared with different alkaline and alkaline earth compounds, and with different binding agents.
Figure 2: Influence of the type of binder on the SO₂ adsorption capacity of materials obtained with Ca(OH)₂.
Figure 3.- Influence of the addition of alkaline compounds to the Ca(OH)₂-sepiolite system.
Figure 4 Influence of extrusion pressure and final cylinder diameter on the SO₂ adsorption capacity of selected materials.
Figure 5. Results of Mercury Intrusion Porosimetry (MIP) of the described materials 1 and 2. A) Accumulated pore volume. B) Pore size distribution (dV/dlogD).

### EXAMPLES

### Example 1. Obtaining of adsorbing materials and determination of their physical properties

Several adsorbing materials according to the invention were obtained, and their texture and mechanical strength was analyzed. Textural properties were assessed by mercury intrusion porosimetry (MIP). Two mechanical resistance tests were carried out: radial crushing strength was evaluated in a motorized TCM Series force tester (Chatillon DF, Ametek), whereas fines production was analyzed in a home-made abrasion testing machine by subjecting the sample to constant rotation for 30 min at 45 rpm.

For comparison, several other materials with some of the components indicated in the invention were also obtained, analyzed and tested in the same way.

### Comparative material 1 (CM1)

Commercial calcium hydroxide and sepiolite in powder form were provided. 363.1 g of sepiolite (17.4% wt. humidity) was thoroughly mixed with 734.5 g of calcium hydroxide (4.7% wt. humidity), and then 629.3 ml of water was slowly added to the resulting powder, kneading the mixture for 15 minutes. The mass thus obtained was shaped by means of an endless screw extruder, using an extrusion pressure of around 10 bar, to obtain cylinders of 3.5 mm in diameter, which were subsequently cut into pieces of 3-4 mm in length. The formed pieces were dried at room temperature for 24 hours until the final humidity of the sample was 15% by weight. According to MIP, the cylinders thus obtained have a specific surface area of 22.6 m²g⁻¹ and a total pore volume of 0.29 cm³g⁻¹, of which 21% are mesopores and the rest are macropores. The mechanical resistance tests indicated a radial crushing strength = 0.24 Kg mm⁻¹, and 6.9 wt.% fines production.

Variations of this comparative material 2 with other alkaline earth compounds and silicate binders were obtained by the same procedure.

### Comparative material 2 (CM2)

26 ml of a 5 N NaOH solution was added drop by drop to 88.6 g of CM1 which was then dried for 24 hours at room temperature. This resulted in a material that was subjected to the same tests described in CM1. According to MIP, the cylinders thus obtained have a specific surface area of 14 m²g⁻¹ and a total pore volume of 0.24 cm³g⁻¹, of which 16% are mesopores and 84% are macropores. The mechanical resistance tests indicated a radial crushing strength = 1.07 Kg mm⁻¹, and 7.6 wt.% fines production.

### Comparative material 3 (CM3)

Commercial raw materials in powder form were provided. 225 g of sepiolite (15.6% wt. humidity) were thoroughly mixed with 412 g of calcium hydroxide (4.7% wt. humidity), 112 g of sodium bicarbonate (0.05% wt. humidity). 513 mL of water was added slowly to the resulting powder, kneading the mixture for 15 minutes. The mass thus obtained was shaped by means of an endless screw extruder, using an extrusion pressure of around 10 bar, to obtain cylinders of 3.5 mm in diameter, which were subsequently cut into pieces of 3-4 mm in length. The formed parts were dried at room temperature for 24 hours until the final humidity of the sample was 6% by weight. The cylinders thus obtained have a specific surface area of 25.9 m² g⁻¹, a total pore volume of 0.32 cm³ g⁻¹, of which 17% are mesopores and the rest are macropores.

The mechanical resistance tests carried out showed that they have a radial crushing strength = 0.61 Kg·mm⁻¹ and by subjecting these particles to constant rotation for 30 minutes at a speed of 45 rpm a 13.3% by weight of fines is produced.

### Comparative material 4 (CM4)

Commercial raw materials, all in powder form, were provided. 225 g of sepiolite (17.4% wt. humidity) were thoroughly mixed with 262 g of calcium hydroxide (4.4% wt. humidity) and with 262 g of potassium bicarbonate (0.25% wt. humidity). 536 mL of water was added slowly to the resulting powder, kneading the mixture for 15 minutes. The mass thus obtained was shaped by means of an endless screw extruder, using an extrusion pressure of around 10 bar, to obtain cylinders of 3.5 mm in diameter, which were subsequently cut into pieces of 3-4 mm in length. The formed pieces were dried at room temperature for 48 hours until the final humidity of the sample was 19% by weight. The cylinders thus obtained have a specific surface area of 5.3 m² g⁻and a total pore volume of 0.15 cm³ g⁻¹, of which 92% are macropores.

The mechanical resistance tests showed that they have a radial crushing strength = 0.78 Kg mm⁻¹, and when subjected to constant rotation for 30 minutes at a speed of 45 rpm a 5.7% by weight of fines = was produced.

### Material of the invention 1 (MI1)

Commercial raw materials, all in powder form, were provided. 450 g of sepiolite with 12.2% wt. humidity were thoroughly mixed with 450 g of calcium hydroxide with 4.4% wt. humidity, 300 g of sodium bicarbonate with 0.05% wt. humidity and with 300 g of potassium bicarbonate with 0.25% wt. humidity. 560 ml of water were added slowly to the resulting powder, kneading the mixture for 15 minutes. The mass thus obtained is formed by means of an endless screw extruder, using an extrusion pressure of around 10 bar, to obtain cylinders of 3.5 mm in diameter, which were subsequently cut into pieces of 3-4 mm in length. The formed pieces were dried at room temperature for 48 hours until the final humidity of the sample is 16% by weight. The cylinders thus obtained have a specific surface of 6.3 m²/g, a total pore volume of 0.24 cm³ g⁻¹, of which 7% are mesopores and 93% are macropores.

The mechanical strength tests carried out showed that they have a radial crushing strength of 58 Kg mm⁻¹ and, when subjected to constant rotation these particles for 30 minutes at a speed of 45 rpm, a percentage of fines of 8% by weight is produced.

### Material of the invention 2 (MI2)

Commercial raw materials, all in powder form, were provided. 120 g of sepiolite with 15.6% wt. humidity were thoroughly mixed with 120 g of calcium hydroxide with 44% wt. humidity 80 g of sodium bicarbonate with 0.05% wt. humidity and with 80 g of potassium bicarbonate with 0.25% wt. humidity. 218 ml of water were slowly added to the resulting powder, kneading the mixture for 5 minutes. The mass thus obtained is formed by a piston extruder, which uses an extrusion pressure significantly less than 10 bar, to obtain cylinders of 3.5 mm in diameter, which are subsequently cut into pieces of 3-4 mm in length. The formed pieces were dried at room temperature for 48 hours until the final humidity of the sample is 7.8% by weight. The cylinders thus obtained have a specific surface of 6.1 m²g⁻¹, a total pore volume of 0.33 cm³g⁻¹, of which 6% are mesopores and 94% are macropores.

The mechanical strength tests carried out showed that they have a radial crushing strength is 0.33 Kg mm⁻¹ and, when subjected to constant rotation these particles for 30 minutes at a speed of 45 rpm, a percentage of fines = 10.1% by weight is produced.

### Material of the invention 3 (MI3)

Commercial raw materials, all in powder form, were provided. 900 g of sepiolite with 12.2% wt. humidity are thoroughly mixed with 900 g of calcium hydroxide with 4.4% wt. humidity 600 g of sodium bicarbonate with 0.05% wt. humidity and with 600 g of potassium bicarbonate with 0.25% wt. humidity. 1219 mL of water were added slowly to the resulting powder, kneading the mixture for 5 minutes. The mass thus obtained is formed by a piston extruder, which uses an extrusion pressure significantly less than 10 bar, to obtain cylinders of 5.0 mm in diameter, which were subsequently cut into pieces of 3-4 mm in length. The formed pieces were dried at room temperature for 36 hours until the final humidity of the sample is 9% by weight. The cylinders thus obtained have a specific surface of 4.8 m²g⁻¹, a total pore volume of 0.28 cm³g⁻¹, of which 5% are mesopores and 95% are macropores.

The mechanical strength tests carried out showed that they have a radial crushing strength = 0.46 Kg mm⁻¹ and when subjected to constant rotation for 30 minutes at a speed of 45 rpm a 4.3% by weight of fines is produced.

### Example 2. Determination of the capacity to retain SO₂.

The dynamic capacity to retain SO₂ for the materials obtained (both CM and MI) was measured and compared. To analyze the dynamic adsorption capacity of these materials, the breakthrough curve was determined by tests on a reactor following ASTM D-6646. Adsorption capacity was tested by filling a 22.5-mm-long cylindrical horizontal reactor of 22.5 mm internal diameter with the needed amount of sample and feeding a gas stream of 700 N mL min⁻¹ with a concentration of 8.2 vol.% SO₂ at a temperature of 250°C and pressure close to atmospheric. As a result of these measures, the adsorption capacity of SO₂ has been determined for each of them until the outflow concentration exceeds 0.3 vol.%. The results for each material were as follows:
- CM1: 30 g of this material were introduced into the reactor for the mentioned dynamic adsorption tests. It retained all the SO₂, maintaining a concentration of SO₂ at the outlet equal to or less than 0.03% in volume for 8.4 minutes. During this time, an amount of SO₂ equivalent to 52.0 mg of SO₂ g_{adsorbent}⁻¹ was retained.
- CM2: 88.6 g of this material were introduced into the reactor for the mentioned dynamic adsorption tests. It retained all the SO₂, maintaining a concentration of SO₂ at the outlet equal to or less than 0.03% in volume for 47.5 minutes. During this time, an amount of SO₂ equivalent to 90 mg of SO₂ g_{adsorbent}⁻¹ was retained.
- CM3: 77.7 g of this material were introduced into the reactor for the adsorption tests. It retained all the SO₂, maintaining a concentration of SO₂ at the outlet equal to or less than 0.03% in volume for 49.2 minutes. During this time, an amount of SO₂ equivalent to 106 mg of SO₂·g_{adsorbent-}⁻¹ was retained.
- CM4: 94 g of this material were introduced into the reactor for the adsorption tests. It retained all the SO₂, maintaining a concentration of SO₂ at the outlet equal to or less than 0.03% by volume for 37 minutes. During this time, an amount of SO₂ equivalent to 66 mg of SO₂ g_{adsorbent}⁻¹ was retained.
- MI1: 72.2 g of this material properly compacted were introduced into the reactor for the adsorption tests. It retained all the SO₂, maintaining a concentration of SO₂ at the output equal to or less than 0.03% by volume, for 96.5 minutes. During this time, an amount of SO₂ equivalent to 225 mg of SO₂ g_{adsorbent}⁻¹ has been retained.
- MI2: 68.5 grams of this material properly compacted were introduced into the reactor for the adsorption tests. It retained all the SO₂, maintaining a concentration of SO₂ at the output equal to or less than 0.03% in volume, for 150.9 minutes. During this time, an amount of SO₂ equivalent to 370 mg of SO₂ g_{adsorbent}⁻¹ has been retained.
- MI3: 66.1 g of this material properly compacted were introduced into the reactor for the adsorption tests. It. It retained all the SO₂, maintaining a concentration of SO₂ at the output equal to or less than 0.03% in volume, for 132.7 minutes. During this time, an amount of SO₂ equivalent to 308 mg of SO₂ g_{adsorbent}⁻¹ has been retained.

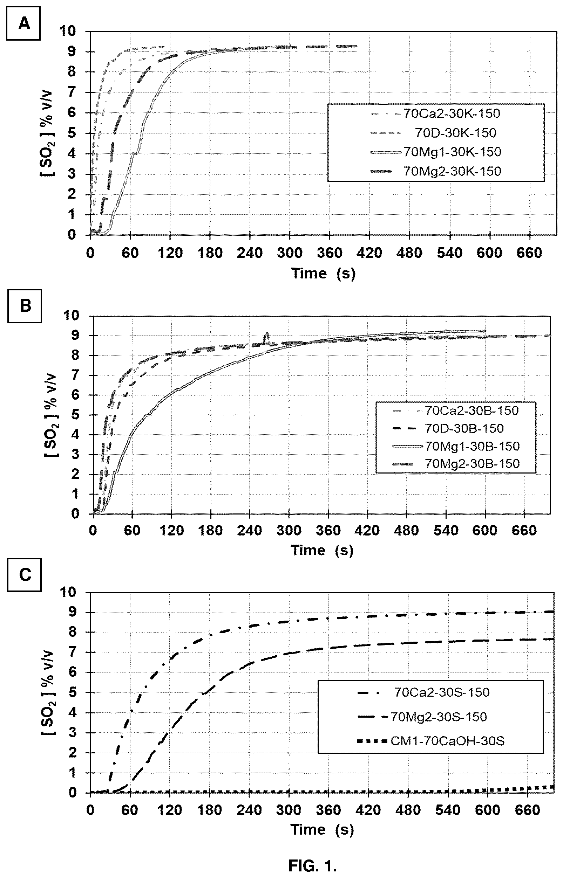

Among the different materials based on alkaline earth compounds that have been tested, i.e. based on calcium hydroxide (CaOH), magnesium oxide (Mg1), calcium carbonate (Ca2), magnesium carbonate (Mg2), or dolomite (D), combined with different binding agents: sepiolite (S), kaolinite (K) and bentonite (B), the most efficient under the indicated conditions is calcium hydroxide with 30 wt.% sepiolite (CM1), whose preparation and characteristics are described in example 1. Figure 1 (A, B and C) show the comparison of the SO₂ adsorption breakthrough curves of the different types of adsorbents.

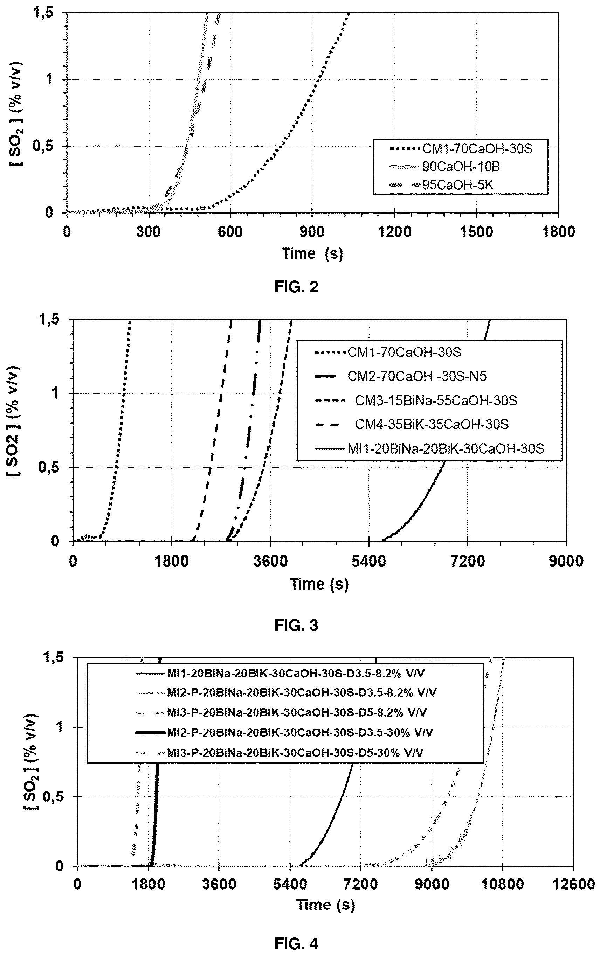

Taking calcium hydroxide as the most active compound in the retention of SO₂, the influence of the silicate used as a binding agent was analyzed. Figure 2 compares the results obtained with sepiolite, bentonite and kaolinite in the minimum proportions necessary to obtain extruded calcium hydroxide with acceptable mechanical strength, showing that the best adsorption is obtained with the 70CaOH-30S system (CM1), although it only has 70 wt.% Ca(OH)₂, whereas bentonite and kaolinite, have 90 and 95 wt.%, respectively.

Figure 3 analyzes the effect produced on the Ca(OH)₂-sepiolite system (CM1) by adding compounds of alkaline elements: 5N NaOH solution (N5) as well as sodium bicarbonate (BiNa) and potassium bicarbonate (BiK) powders. The five breakthrough curves of the figure show that the SO₂ retention capacity increases progressively when NaOH 5N (CM2), sodium bicarbonate (CM3), potassium bicarbonate (CM) and both bicarbonates (MI1) are added to the Ca(OH)₂-sepiolite system.

CM1 to CM4 and MI1 have been prepared using an endless screw extruder operating at a pressure of ca. 10 bar. In order to analyze the influence of the extrusion pressure on the material properties, a material similar to CM4 was prepared using a piston extruder operating at a significantly lower pressure. The procedure followed and the results obtained are described in the Example 1, MI2. In addition, the influence of the size of the final cylinder has been studied by varying the diameter of the extrusion row between 3 and 5 mm, as described in the Example 1, MI3. The SO₂ retention results compared in Figure 4 show that the materials prepared in piston extruder, MI2 and MI3, are more efficient, with an adsorption capacity greater than 300 mg SO₂/g adsorbent, especially the one with the smallest diameter (3.5 mm), due to its greater external geometric surface area exposed to the pollutant. MI2 and MI3 were also tested at high SO2 concentration, 30 vol.%, representatives of peak emissions, to confirm that their retention capacity is enough to keep SO2 concentration below 0.03% in volume for time longer that typical peaks duration (MI1 = 96.5 minutes, MI2 = 150.9 minutes).

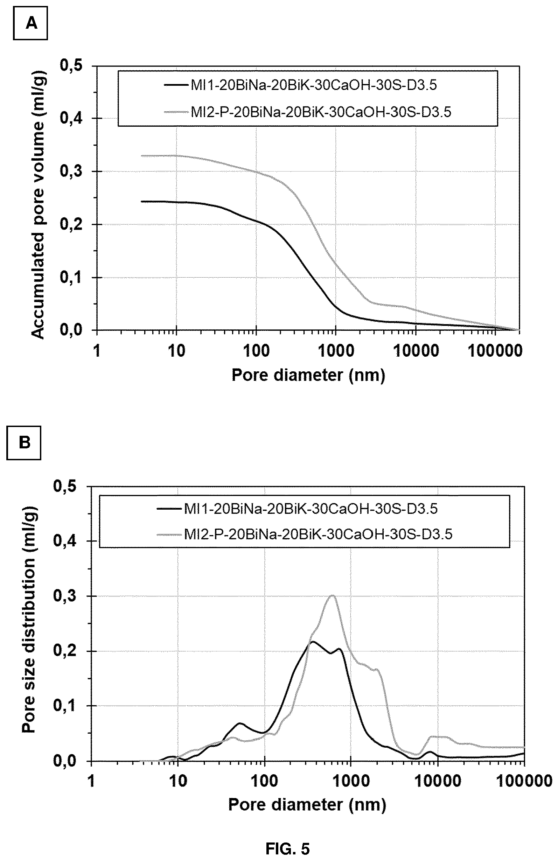

The difference in SO₂ retaining capacity of the materials under the established conditions is determined by the variation of the porous structure as a function of the extrusion pressure. Figure 5 shows the Mercury Intrusion Porosimetry (MIP) results of MI1 and MI2, being their only difference the method used for extrusion. It can be seen that both materials have a porous distribution formed mainly by macropores (diameter greater than 50 nm), but when the piston extruder was used, the higher contribution of pores bigger than 0.3 microns favors the adsorption of SO₂ inside the particles, thus increasing efficiency.

In table 1, the SO₂ adsorption properties of some of the mentioned materials, as well as their mechanical and textural properties, have been collected for easy comparison, highlighting the importance of the macroporosity for the SO₂ adsorption properties under the established conditions. Likewise, it is observed that the increase in porosity is usually accompanied by a decrease in mechanical resistance, which forces the adoption of a compromise solution.

**Table 1.- Mechanical resistance, textural properties and adsorption capacity until SO₂ concentration reaches 0.3 vol. % of various selected materials.**

| **Composition of material** | **Textural properties** | | **Mechanical resistance** | | **Adsorption capacity [SO₂]>0.3 vol.%** | **Material reference (CM or MI) / Mentioned in Figure (F)** |
|---|---|---|---|---|---|---|
| | **Total pore V** | **Macropore V** | **Radial crushing strength (kgmm⁻¹)** | **Fines** | **(mg SO₂ g⁻¹)** | |
| | **(mLg⁻¹)** | **(%)** | | **(%)** | | |
| 70CaOH-30S | 0.29 | 79.0 | 0.24 | 6.9% | 52 | CM1/F1, F2 y F3 |
| 90CaOH-10B | 0.32 | 88.0 | 0.69 | 5.7% | 35 | F2 |
| 95CaOH-5K | 0.25 | 88.0 | 0.82 | 3.9% | 33 | F2 |
| 70CaOH -30S-N5 | 0.24 | 84.0 | 1.07 | 7.6% | 90 | CM2/F3 |
| 15BiNa-55CaOH-30S | 0.32 | 83.0 | 0.61 | 13.3% | 106 | CM3/F3 |
| 35BiK-35CaOH-30S | 0.15 | 92.0 | 0.78 | 5.7% | 66 | CM4/F3 |
| 20BiNa-20BiK-30CaOH-30S-D3.5 | 0.24 | 93.0 | 0.58 | 0.8% | 225 | MI1/F3, F4 |
| P-20BiNa-20BiK-30CaOH-30S-D3.5 | 0.31 | 95.0 | 0.37 | 7.2% | 352 | MI2/F4, F5 |
| P-20BiNa-20BiK-30CaOH-30S-D5 | 0.28 | 95.0 | 0.46 | 32.2% | 308 | MI3/F4 |

### Conclusions.

Figure 1 shows a summary of the breakthrough curves obtained by varying the type of alkaline earth compounds and clays. It can be seen that using oxides and carbonates, the total SO₂ retention time (SO₂ concentration less than 0.3%) is always less than 60s, only reaching 600s for calcium hydroxide, Ca(OH)₂, which is ultimately the alkaline earth material selected for the invention. Taking into account the type of application in which these materials must be used, the other alkaline earth materials proposed in the prior art do not meet the minimum conditions requested.

Figure 2 describes the influence of the type of binder to prepare adsorbents based on calcium hydroxide and clearly shows the greater performance of sepiolite to agglomerate this compound and achieve total SO₂ retention values in the order of 10 minutes. Figure 3 shows a synergistic effect obtained by combining alkaline and alkaline earth components in the material of the invention, given that alkaline additives: sodium hydroxide (N5), sodium bicarbonate (BiNa), potassium bicarbonate (BiK) and their mixture (BiNa+BiK), improve the performance of the previously selected Ca(OH)₂ + sepiolite system. The total SO₂ retention capacity increases with the addition of sodium and potassium bicarbonates from 10 minutes (600 s) to more than 1.5 hours (5500 s), which, expressed in terms of retained mg SO₂ g_{adsorbent}⁻¹, means an increase from 52 to 225, i.e. more than 40 times the value of the Ca(OH)₂-sepiolite system. Finally, the use of a piston extruder allows reducing the extrusion pressure, leading to improved macroporosity, so that the total retention time achieved under the same operating conditions as in the rest of the experiments reaches 2.5 hours, equivalent to 325 mg SO₂ g_{adsorbent}⁻¹.

## Claims

1. Material for adsorbing SO₂ from a gaseous stream, wherein said material comprises the following components:
a. 20-40% wt. of Ca(OH)₂,
b. 20-40% wt. of sepiolite,
c. 10-30% wt. of NaHCO₃ and
d. 10-30% wt. of KHCO₃.

2. Material according to claim 1, wherein said material comprises the following components:
a. 25-35% wt. of Ca(OH)₂,
b. 25-35% wt. of sepiolite,
c. 15-25% wt. of NaHCO₃ and
d. 15-25% wt. of KHCO₃.

3. Material according to claim 2, wherein said material comprises the following components:
a. 30% wt. of Ca(OH)₂,
b. 30% wt. of sepiolite,
c. 20% wt. of NaHCO₃ and
d. 20% wt. of KHCO₃.

4. Material according to any one of previous claims, wherein the total humidity content of said material is between 5-20% wt.

5. Material according to any one of previous claims, wherein the specific surface of said material is between 3-10 m²g⁻¹.

6. Material according to any one of previous claims, wherein the volume of meso and macropores of said material is between 0.20-0.40 cm³g⁻¹.

7. Material according to any one of previous claims, wherein the proportion of macropores of said material is greater than 90%

8. Material according to any one of previous claims, wherein said material is shaped as solid cylinders.

9. Material according to previous claim, wherein said cylinders have dimensions of 2 to 10 mm in diameter, preferably between 3 and 5 mm, and 3 to 10 mm in length.

10. A method to obtain a material according to any one of previous claims, comprising the following steps:
a. mixing sepiolite, calcium hydroxide, sodium bicarbonate and potassium bicarbonate powders until a homogeneous powder mixture is obtained;
b. adding water to the mixture of powders and kneading the homogeneous mixture to obtain a wet paste to obtain adequate plasticity;
c. extruding the wet paste, and
d. drying the extruded pieces at a temperature between 40 and 60°C for a time between 4-48 hours.

11. The method according to claim 10, wherein the step (c) is carried out at a pressure below 10 bar.

12. The method according to any one of claims 10 or 11, wherein step (c) is carried out in a piston extruder.

13. The method according to any one of claims 10 to 12, wherein the wet paste of step (c) is extruded in the form of solid cylinders.

14. Use of the material according to anyone of claims 1 to 9 for the adsorption of SO₂.

15. Use according to claim 14, wherein the adsorption occurs in dynamic regime and high concentration of SO₂ at temperatures between 50 and 300ºC.

## Patentansprüche

1. Material zur Adsorption von SO₂ aus einem gasförmigen Strom, wobei das Material die folgenden Komponenten umfasst:
a. 20-40 Gew.- % Ca(OH)₂,
b. 20-40 Gew.- % Sepiolith,
c. 10-30 Gew.- % NaHCO₃ und
d. 10-30 Gew.- % KHCO₃.

2. Material nach Anspruch 1, wobei das Material die folgenden Komponenten umfasst:
a. 25-35 Gew.- % Ca(OH)₂,
b. 25-35 Gew.- % Sepiolith,
c. 15-25 Gew.- % NaHCO₃ und
d. 15-25 Gew.- % KHCO₃.

3. Material nach Anspruch 2, wobei das Material die folgenden Komponenten umfasst:
a. 30 Gew.- % Ca(OH)₂,
b. 30 Gew.- % Sepiolith,
c. 20 Gew.- % NaHCO₃ und
d. 20 Gew.- % KHCO₃.

4. Material nach einem der vorstehenden Ansprüche, wobei der Gesamtfeuchtigkeitsgehalt des Materials zwischen 5-20 Gew.- % liegt.

5. Material nach einem der vorstehenden Ansprüche, wobei die spezifische Oberfläche des Materials zwischen 3-10 m²g⁻¹ liegt.

6. Material nach einem der vorstehenden Ansprüche, wobei das Volumen der Meso- und Makroporen des Materials zwischen 0,20-0,40 cm³g⁻¹ liegt.

7. Material nach einem der vorstehenden Ansprüche, wobei der Anteil der Makroporen des Materials größer als 90 % ist

8. Material nach einem der vorstehenden Ansprüche, wobei das Material als Vollzylinder geformt ist.

9. Material nach dem vorstehenden Anspruch, wobei die Zylinder Abmessungen von 2 bis 10 mm im Durchmesser, vorzugsweise zwischen 3 und 5 mm und 3 bis 10 mm in der Länge aufweisen.

10. Verfahren zum Erhalten eines Materials nach einem der vorstehenden Ansprüche, umfassend die folgenden Schritte:
a. Mischen von Sepiolith-, Calciumhydroxid-, Natriumbicarbonat- und Kaliumbicarbonat-Pulvern, bis eine homogene Pulvermischung erhalten wird;
b. Zugeben von Wasser zu der Pulvermischung und Kneten der homogenen Mischung, um eine Nasspaste mit einer ausreichenden Plastizität zu erhalten;
c. Extrudieren der Nasspaste und
d. Trocknen der extrudierten Stücke bei einer Temperatur zwischen 40 und 60 °C für einen Zeitraum zwischen 4-48 Stunden.

11. Verfahren nach Anspruch 10, wobei der Schritt (c) bei einem Druck unter 10 bar durchgeführt wird.

12. Verfahren nach einem der Ansprüche 10 oder 11, wobei Schritt (c) in einem Kolbenextruder durchgeführt wird.

13. Verfahren nach einem der Ansprüche 10 bis 12, wobei die Nasspaste aus Schritt (c) in Form von Vollzylindern extrudiert wird.

14. Verwendung des Materials nach einem der Ansprüche 1 bis 9 zur Adsorption von SO₂.

15. Verwendung nach Anspruch 14, wobei die Adsorption in dynamischem Regime und hoher Konzentration von SO₂ bei Temperaturen zwischen 50 und 300°C erfolgt.

## Revendications

1. Matériau de rétention de SO₂ à partir d'un flux gazeux, ledit matériau comprenant les composants suivants :
a. 20-40 % en poids de Ca(OH)₂,
b. 20-40 % en poids de sépiolite,
c. 10-30 % en poids de NaHCO₃ et
d. 10-30 % en poids de KHCO₃.

2. Matériau selon la revendication 1, ledit matériau comprenant les composants suivants :
a. 25-35 % en poids de Ca(OH)₂,
b. 25-35 % en poids de sépiolite,
c. 15-25 % en poids de NaHCO₃ et
d. 15-25 % en poids de KHCO₃.

3. Matériau selon la revendication 2, ledit matériau comprenant les composants suivants :
a. 30 % en poids de Ca(OH)₂,
b. 30 % en poids de sépiolite,
c. 20 % en poids de NaHCO₄ et
d. 20 % en poids de KHCO₃.

4. Matériau selon l'une quelconque des revendications précédentes, la teneur totale en humidité dudit matériau étant comprise entre 5 et 20 % en poids.

5. Matériau selon l'une quelconque des revendications précédentes, la surface spécifique dudit matériau étant comprise entre 3 et 10 m²g⁻¹.

6. Matériau selon l'une quelconque des revendications précédentes, le volume de mésopores et de macropores dudit matériau étant compris entre 0,20 et 0,40 cm³g⁻¹.

7. Matériau selon l'une quelconque des revendications précédentes, la proportion de macropores dudit matériau étant supérieure à 90 %.

8. Matériau selon l'une quelconque des revendications précédentes, ledit matériau ayant la forme de cylindres pleins.

9. Matériau selon la revendication précédente, lesdits cylindres ayant des dimensions de 2 à 10 mm de diamètre, de préférence entre 3 et 5 mm, et de 3 à 10 mm de longueur.

10. Procédé d'obtention d'un matériau selon l'une quelconque des revendications précédentes, comprenant les étapes suivantes consistant à :
a. mélanger des poudres de sépiolite, d'hydroxyde de calcium, de bicarbonate de sodium et de bicarbonate de potassium jusqu'à l'obtention d'un mélange homogène de poudres ;
b. ajouter de l'eau au mélange de poudres et malaxer le mélange homogène pour obtenir une pâte humide et ainsi une plasticité adéquate ;
c. extruder la pâte humide ; et
d. sécher les pièces extrudées à une température comprise entre 40 et 60 °C pendant une durée comprise entre 4 et 48 heures.

11. Procédé selon la revendication 10, l'étape (c) étant réalisée à une pression inférieure à 10 bars.

12. Procédé selon l'une quelconque des revendications 10 ou 11, l'étape (c) étant réalisée dans une extrudeuse à piston.

13. Procédé selon l'une quelconque des revendications 10 à 12, la pâte humide de l'étape (c) étant extrudée sous la forme de cylindres pleins.

14. Utilisation du matériau selon l'une quelconque des revendications 1 à 9 pour la rétention de SO₂.

15. Utilisation selon la revendication 14, la rétention se produisant en régime dynamique et à forte concentration de SO₂ à des températures comprises entre 50 et 300 °C.
